# EUROPÄISCHE PATENTSCHRIFT

(11) **EP 3 319 823 B1**
(45) Veröffentlichungstag und Bekanntmachung des Hinweises auf die Patenterteilung: **14.08.2019**
(21) Anmeldenummer: 16731848.4
(22) Anmeldetag: 17.06.2016
(51) Int. Cl.: B60H 1/32, B60H 1/00, F25B 5/04, F25B 9/00, F25B 49/02

(54) **KLIMATISIERUNGSVORRICHTUNG FÜR EIN KRAFTFAHRZEUG UND VERFAHREN ZU DEREN BETRIEB**
AIR-CONDITIONING DEVICE FOR A MOTOR VEHICLE AND METHOD FOR OPERATING SAID AIR-CONDITIONING SYSTEM
DISPOSITIF DE CLIMATISATION POUR VÉHICULE AUTOMOBILE ET PROCÉDÉ PERMETTANT DE FAIRE FONCTIONNER LEDIT DISPOSITIF

(30) Priorität: 10.07.2015 DE 102015213012
(43) Veröffentlichungstag der Anmeldung: 16.05.2018
(73) Patentinhaber: Volkswagen Aktiengesellschaft, 38440 Wolfsburg (DE)
(72) Erfinder: ALBRECHT, Jan-Christoph, 38442 Wolfsburg (DE); WACHSMUTH, Cartsten, 38179 Lagesbüttel (DE)
(86) Internationale Anmeldenummer: PCT/EP2016/064099
(87) Internationale Veröffentlichungsnummer: WO 2017/009003

(56) Entgegenhaltungen:
- DE-A1- 2 639 339
- DE-A1-102006 042 789
- DE-A1-102008 008 447

## Beschreibung

Die Erfindung bezieht sich auf Klimatisierungsvorrichtung für ein Kraftfahrzeug, umfassend einen Kältemittelkreis mit
- einem Kompressor zur Verdichtung eines Kältemittels,
- einen dem Kompressor kältemittelseitig nachgeschalteten Kondensator oder Gaskühler zur Verflüssigung oder Kühlung des verdichteten Kältemittels und
- einen von einem zu kühlenden Luftstrom durchströmten, dem Kondensator oder Gaskühler kältemittelseitig nachgeschalteten Verdampfer, der einen ersten Verdampferabschnitt und einen zweiten Verdampferabschnitt umfasst, wobei der zweite Verdampferabschnitt dem ersten Verdampferabschnitt sowohl luftseitig als auch kältemittelseitig nachgeschaltet ist und wobei kältemittelseitig vor dem ersten Verdampferabschnitt ein erstes Expansionsorgan und hinter dem ersten Verdampferabschnitt und vor dem zweiten Verdampferabschnitt ein zweites Expansionsorgan, jeweils zum regulativen Drosseln des Kältemittelstroms, angeordnet ist.

Die Erfindung bezieht sich weiter auf ein Verfahren zum Betrieb einer solchen sowie ähnlicher Klimatisierungsvorrichtungen.

Gattungsgemäße Klimatisierungsvorrichtungen für Kraftfahrzeuge sind bekannt aus der DE 10 2011 109 321 A1. Diese Druckschrift offenbart eine zweiteilige Ausgestaltung eines Verdampfers mit zwei Verdampferabschnitten, die mechanisch parallel zueinander angeordnet sind, sodass ein zu kühlender Luftstrom durch beide Verdampferabschnitte nacheinander hindurchströmen und anschließend in die Fahrgastzelle des Kraftfahrzeugs eingeblasen werden kann. Am Eingang des Verdampfers, d.h. kältemittelseitig vor dem ersten Verdampferabschnitt, ist ein nicht näher spezifiziertes und als "Expansionsventil" bezeichnetes Expansionsorgan angeordnet. Kältemittelseitig zwischen den beiden Verdampferabschnitten ist eine schaltbare Drossel angeordnet. Diese beiden Expansionsorgane dienen zusammen mit anderen Stellelementen der Regelung der Klimatisierungsvorrichtung, die etliche weitere Komponenten, insbesondere auch weitere Verdampfer aufweist.

Aus der DE 10 2014 207 278A1 ist eine Klimatisierungsvorrichtung für ein Kraftfahrzeug bekannt, die ebenfalls einen zweiteiligen Verdampfer aufweist. Die Besonderheit dieser Klimatisierungsvorrichtung besteht darin, dass der zweite Verdampferabschnitt bei Temperaturen unter 0°C betrieben wird, während der erste Verdampferabschnitt bei Temperaturen über 0°C betrieben wird. Dies ist zur Erzielung eines besonderen Kälteerlebnisses in der Fahrgastzelle vorteilhaft.

Die DE 26 39 339 offenbart eine Klimatisierungsvorrichtung gemäß Oberbegriff des Anspruchs 1.

Es ist die Aufgabe der vorliegenden Erfindung, eine gattungsgemäße Klimatisierungsvorrichtung derart zu modifizieren, dass sie zum Betrieb ihres zweiten Verdampferabschnitts unter 0°C besonders gut geeignet ist. Es ist eine weitere Aufgabe der der vorliegenden Erfindung, ein für eine derartige Klimatisierungsvorrichtung geeignetes Betriebsverfahren anzugeben.

Diese Aufgabe wird in Verbindung mit den Merkmalen des Oberbegriffs von Anspruch 1 dadurch gelöst, dass das erste Expansionsorgan als thermostatisches Expansionsventil oder Regelventil oder Fixdrossel und das zweite Expansionsorgan als Regelventil ausgebildet ist.

Bevorzugte Ausführungsformen der Erfindung sind Gegenstand der abhängigen Patentansprüche.

Die erfindungsgemäße, spezielle Gestaltung der Expansionsorgane, nämlich als thermostatisches Expansionsventil kältemittelseitig vor dem kältemittelseitigen Eingang des ersten Verdampferabschnittes und als Regelventil kältemittelseitig zwischen den beiden Verdampferabschnitten stellt einen besonders vorteilhaften Kompromiss aus Wirtschaftlichkeit einerseits und Effizienz des mit einer solchen Vorrichtung möglichen Betriebsverfahrens dar. Bei einer Klimatisierungsvorrichtung, die in der Lage sein soll, besonders tiefe Temperaturen zu erzeugen, d.h. einen besonders kalten Luftstrom zu generieren, der zur Erzeugung eines intensiven Kälteerlebnisses in der Fahrgastzelle dient, ist es offensichtlich wichtig, den Verdampfer (wenigstens abschnittsweise) bei sehr tiefen Temperaturen zu betreiben. Dies hat jedoch den Nachteil, dass die bei der Verdampfer-Durchströmung kondensierende Luftfeuchte am Verdampfer anfriert und diesen mit der Zeit zusetzt. Um dem entgegenzuwirken, ist der Verdampfer zweiteilig ausgebildet, wobei lediglich der luftausgangsseitige Verdampferabschnitt unter 0°C betrieben wird. Der lufteingangsseitige Verdampferabschnitt wird ebenfalls bei niedrigen Temperaturen, jedoch spürbar über 0°C betrieben, sodass der Luftstrom bei Durchströmung des ersten Verdampferabschnitts eine stark Vorkühlung und vor allem eine starke Entfeuchtung erfährt, die jedoch nicht zu einem Zufrieren des ersten Verdampferabschnittes führen kann. Der unter 0°C betriebene und daher vereisungsgefährdete zweite Verdampferabschnitt wird lediglich von der stark entfeuchteten Luft durchströmt, sodass seine tatsächliche Vereisung deutlich verzögert wird. Das Regelventil zwischen den beiden Verdampferabschnitten erlaubt hier eine filigrane Regelung des notwendigen Temperaturunterschieds, der, wie nachfolgend erläutert, in bestimmten Betriebsphasen vergleichsweise klein, in anderen Betriebsphasen jedoch sehr groß ausfallen kann. Auch das erste Expansionsorgan trägt selbstverständlich zur Regelung der Gesamtvorrichtung bei; hier ist jedoch kein so breites Arbeitsbereichs-Spektrum erforderlich, wie beim zweiten Expansionsorgan. Die Wahl des ersten Expansionsorgans als thermostatisches Expansionsventil ist hier nach Erkenntnis der Erfinder optimal, da ein solches Element einerseits über ein hinreichend breites Arbeitsbereich-Spektrum verfügt, um bei den unterschiedlichsten klimatischen Randbedingungen zuverlässig arbeiten zu können. Andererseits ist es wirtschaftlich günstiger als die Verwendung eines weiteren Regelventils. Letzteres ist selbstverständlich auch möglich. Der Gewinn an Breite des Arbeitsbereichs-Spektrums rechtfertigt jedoch nur in speziellen Anwendungsfällen den wirtschaftlichen und steuerungstechnischen Mehraufwand. Umgekehrt kann in Fällen, in denen ein besonderes Augenmerk auf der Wirtschaftlichkeit des Gesamtsystems liegt, als erstes Expansionsorgan auch eine Fixdrossel verwendet werden, die besonders kostengünstig und technisch wenig aufwendig ist, die jedoch selbst bei optimaler Auslegung nur ein sehr schmales Betriebsbereichs-Spektrum abdecken kann. Gleichwohl sollen auch für diese Abwandlungen der Erfindung nachfolgend günstige Betriebsverfahren angegeben werden.

Der Begriff des thermostatischen Expansionsventils, auch thermostatisch geregeltes Expansionsventil genannt, ist dem Fachmann bekannt. Ein thermostatischen Expansionsventil, das in unterschiedlichen Bauformen realisiert sein kann, variiert die Größe eines Durchlasses in konstruktiv bedingter Abhängigkeit von einer Temperatur und einem Druck an einem passiven Fühlerelement. Ein Regelventil in der Terminologie der vorliegenden Beschreibung ist hingegen ein elektrisch betätigbares Ventil mit elektronischer Steuerung, die prinzipiell frei konfigurierbar ist; insbesondere können nahezu beliebige Abhängigkeiten von nahezu beliebigen Führungsgrößen programmiert werden. Als Fixdrossel schließlich wird hier eine feste Verengung in einer Medienleitung verstanden. Es kann sich dabei um eine Blende, eine Kapillare oder Ähnliches handeln. Wesentlich bei der Fixdrossel ist die fehlende Veränderbarkeit ihrer lichten Weite.

Wie erläutert, erfolgt die Ansteuerung eines thermostatischen Expansionsventils über dessen Druck- und Temperatur-Fühlerelement. Bei der vorliegenden Erfindung ist bevorzugt vorgesehen, dass das thermostatische Expansionsventil mit dem kältemittelseitigen Ausgang des zweiten Verdampferabschnitts, d.h. mit dem Ausgang des Gesamt-Verdampfers, verbunden ist. Aus "Sicht" des als thermostatisches Expansionsventil ausgebildeten ersten Expansionsorgans stellt also der Verdampfer der erfindungsgemäßen Klimatisierungsvorrichtung eine Einheit dar. Die Drosselung des Kältemittelstroms am Eingang des Verdampfers erfolgt in Abhängigkeit von dem Kältemittelzustand am Ausgang des Verdampfers. Die Differenzierung der Kältemittelzustände in den einzelnen Verdampferabschnitten ist hingegen Sache des zweiten Expansionsventils, mithin des Regelventils.

Bekanntermaßen kann die Wirkungsweise eines thermostatischen Expansionsventils konstruktiv festgelegt werden. Mit anderen Worten kann ein thermostatisches Expansionsventil für eine bestimmte Wirkung ausgelegt werden, wobei dem Fachmann derartige Auslegungsregeln bekannt sind. Im Rahmen der vorliegenden Erfindung ist bevorzugt vorgesehen, dass das thermostatische Expansionsventil so ausgelegt ist, dass bei geöffnetem Regelventil die Überhitzung des Kältemittels am kältemittelseitigen Ausgang des zweiten Verdampferabschnitts zwischen 1 K und10 K, bevorzugt zwischen 1,5 K und 5 K, besonders bevorzugt zwischen 1,5 Kelvin und 2,5 Kelvin liegt. D.h. dass die Temperatur des Kältemittels am Ausgangs des zweiten Verdampferabschnitts um den genannten Temperaturbereich über der Verdampfungstemperatur des Kältemittels, bei dem am Ausgang des zweiten Verdampferabschnitt herrschenden Druck liegt. Der Fachmann wird erkennen, dass nicht nur die mechanische Gestaltung des Verdampfers, sondern insbesondere auch die Wahl des Kältemittels hierbei eine wesentliche Rolle spielt. Die Auslegung des thermostatischen Expansionsventils hat also stets im Hinblick auf ein konkrete Anlagenkonstellation hin zu erfolgen. Zum Betrieb einer derartigen Klimatisierungsvorrichtung sind folgende Schritte vorgesehen:
- bei vollständig geöffnetem Regelventil Durchströmen des Verdampfers mit Kältemittel mit einem Anfangsmassenstrom, wobei die Temperaturen des Luftstroms am luftseitigen Ausgang des ersten Verdampferabschnitts und am luftseitigen Ausgang des zweiten Verdampferabschnitts, ausgehend von jeweiligen Anfangstemperaturen, absinken, und
- sobald die Temperatur des Luftstroms am luftseitigen Ausgang des ersten Verdampferabschnitts auf eine erste Solltemperatur zwischen 1°C und 3°C abgesunken ist: regulatives Drosseln des Kältemittelstroms mittels des Regelventils, sodass die Temperatur des Luftstroms am luftseitigen Ausgang des ersten Verdampferabschnitts innerhalb eines vorgegebenen ersten Toleranzbereichs um die erste Solltemperatur, jedenfalls jedoch oberhalb 0°C, liegt.

Der anfängliche Betrieb des Verdampfers mit geöffnetem Regelventil bedeutet, dass er in dieser frühen Betriebsphase zunächst als Einheit betrieben wird. Ziel dieser Betriebsphase ist es, den gesamten Verdampfer zügig herunterzukühlen. Diese Phase ist abgeschlossen, wenn der erste Verdampferabschnitt seine erste Solltemperatur zwischen 1°C und 3°C erreicht hat. Beim ersten Erreichen dieser ersten Solltemperatur hat auch der zweite Verdampferabschnitt aufgrund des vollständig geöffneten Regelventils in etwa diese Temperatur.

Das anschließende, regulative Drosseln des Kältemittelstroms mittels des Regelventils führt zu einer Druckverringerung im zweiten Verdampferabschnitt und einer entsprechenden Druckerhöhung im ersten Verdampferabschnitt. Letztere ist für diese Betriebsphase entscheidend. Die Regelung erfolgt so, dass der erste Verdampferabschnitt nur geringfügig von seiner Solltemperatur abweicht und in jedem Fall über 0°C bleibt. Die Abweichungen von der Solltemperatur liegen bevorzugt im Bereich von 1 K bis 2 K. Als Indikator für die Betriebstemperatur des ersten Verdampferabschnitts wird die Temperatur des Luftstroms verwendet, was selbstverständlich eine entsprechende Sensorik voraussetzt.

Unter diesen Konditionen wird die Klimatisierungsvorrichtung nun weiter betrieben. In der Regel führt dies zu einer Abkühlung der Luft in der Fahrgastzelle des Fahrzeugs, wodurch die thermische Last der Klimatisierungsvorrichtung sinkt. Hierdurch kommt es zu einer kontinuierlichen Verringerung des Drucks im zweiten Verdampferabschnitt, was dort ein Absinken der Temperatur, insbesondere deutlich unter 0°C, zur Folge hat. Sobald die Temperatur des Luftstroms am luftseitigem Ausgang des zweiten Verdampferabschnitts auf eine zweite Solltemperatur, die bspw. bei -20°C liegen kann, abgesunken ist, ist der Zielzustand, den es im Weiteren aufrecht zu erhalten gilt, erreicht. Um diesen Zustand zu bewahren, wird im Folgenden der Kältemittel-Massenstrom durch den Verdampfer regulativ reduziert, sodass die Temperatur des Luftstroms am luftseitigen Ausgang des zweiten Verdampferabschnitts innerhalb eines vorgegeben zweiten Toleranzbereichs, der ebenfalls 1 K bis 2 K betragen kann, um die zweite Solltemperatur liegt. Die Reduzierung des Kältemittel-Massenstroms erfolgt dabei bevorzugt durch entsprechende Ansteuerung des Kompressors. Bspw. können dessen Kolbenhub und/oder seine Drehzahl variiert werden.

Für den Fall steigender thermischer Lasten, oder für den Fall, dass die Klimatisierungsvorrichtung aufgrund einer reduzierten Fahrtgeschwindigkeit eine reduzierte Kälteleistung liefert, kann die oben erläuterte Regelstrategie entgegengesetzt angewandt werden. Dann würde zunächst der Kältemittel-Massenstrom erhöht, um dann die Drosselung durch das Regelventil zu reduzieren, bis keine Drosselwirkung mehr vorliegt.

Für die oben erwähnte Abwandlung der erfindungsgemäßen Klimatisierungsvorrichtung, bei der das erste Expansionsorgan statt als thermostatisches Expansionsventil als Regelventil ausgebildet ist, kann das oben erläuterte Verfahren leicht modifiziert werden. Insbesondere erfolgt der oben erläuterte Schritt des anfänglichen Herabkühlens wie folgt.

Bei vollständig geöffnetem zweitem Regelventil Durchströmen des Verdampfers mit Kältemittel mit einem Anfangsmassenstrom, wobei der Kältemittelstrom mittels des ersten Regelventils derart regulativ gedrosselt wird, dass der flüssige Anteil des Kältemittels am kältemittelseitigen Ausgang des zweiten Verdampferabschnitts zwischen 1% und 5%, bevorzugt zwischen 2% und 4%, besonders bevorzugt bei 3%, liegt,
und wobei die Temperaturen des Luftstroms am luftseitigen Ausgang des ersten Verdampferabschnitts und am luftseitigen Ausgang des zweiten Verdampferabschnitts, ausgehend von jeweiligen Anfangstemperaturen, absinken.

Anstelle der Luftstromtemperatur wird hierbei also auf den Flüssigphasen-Anteil des Kältemittels am Verdampferausgang geregelt. Dieser ist jedoch nur schwer messbar. So kann der Flüssigphasen-Anteil auch über eine luftseitige Bilanzierung abgeschätzt werden. D.h. dass die Größe des flüssigen Anteils des Kältemittels über eine Messung des Luftmassenstroms und der Luftstromtemperatur luftseitig vor und hinter dem Verdampfer abgeschätzt werden kann.

Alternativ ist es auch möglich, die Größe des flüssigen Anteils des Kältemittels über eines Messung des Drucks und der Temperatur des Kältemittels am kältemittelseitigen Ausgang des zweiten Verdampferabschnitts aus einem hinterlegten Kennfeld zu ermitteln. Mit anderen Worten wird auf die Überhitzung des Kältemittels hin geregelt, wobei im Rahmen einer Kalibrierung leicht ein Kennfeld aufgestellt werden kann, welches die Abhängigkeit zwischen dem Flüssigphasen-Anteil des Kältemittels und der Überhitzung des Kältemittels für den konkreten Anlagentyp abbildet.

Im Fall der oben ebenfalls erwähnten Abwandlung der Erfindung mit einer Fixdrossel als erstem Expansionsorgan erfolgt der Schritt der anfänglichen Abkühlung gemäß der Auslegung der Fixdrossel ohne weiteres Zutun durch reine Beschickung des Verdampfers mit dem Kältemittel.

Die weiteren Verfahrensschritte entsprechen bei beiden genannten Vorrichtungsabwandlungen exakt den Verfahrensschritten bei dem oben für die erfindungsgemäße Vorrichtung beschriebenen Betriebsverfahren.

Weitere Merkmale und Vorteile der Erfindung ergeben sich aus der nachfolgenden, speziellen Beschreibung und den Zeichnungen.

Es zeigt:

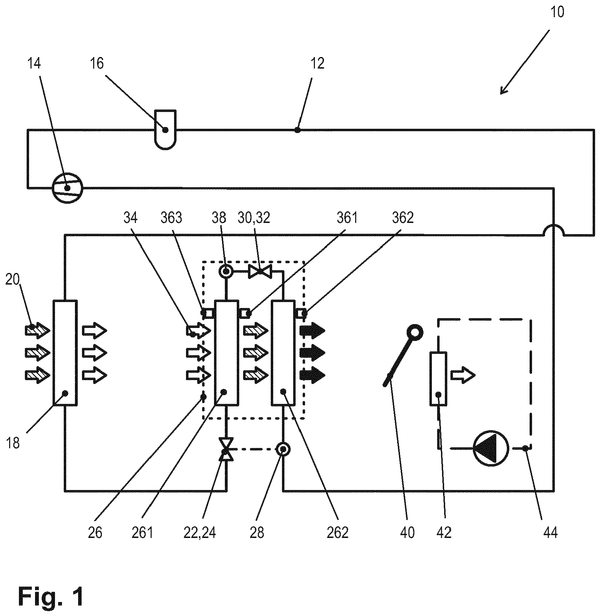

- Figur 1: eine schematische Darstellung einer erfindungsgemäßen Klimatisierungsvorrichtung.

Figur 1 zeigt in stark schematisierter Darstellung eine erfindungsgemäße Klimatisierungsvorrichtung 10. Diese umfasst einen Kältemittelkreis 12. Dieser umfasst einen Kompressor 14 zur Verdichtung des im Kältemittelkreis 12 aufgeführten Kältemittels. Das komprimierte Kältemittel läuft bei der dargestellten Ausführungsform über einen Sammler zur Trennung von flüssiger und gasförmiger Phase des Kältemittels. In einem nachfolgend angeordnetem Kondensator oder Gaskühler 18 wird das verdichtete Kältemittel je nach Ausführungsform verflüssigt und/oder gekühlt. Der Kondensator oder Gaskühler ist als Luft/Kältemittel-Wärmeübertrager ausgebildet, der von einem Kühlluftstrom 20 durchströmt wird. Typischerweise handelt es sich hierbei um eine Außenluftstrom, der bei der Wechselwirkung mit dem Kältemittel im Kondensator 18 Wärme aufnimmt. Die Schraffur der Luftstrompfeile deutet auf die bei der Durchströmung auftretenden Temperaturänderungen hin.

Im Anschluss durchläuft das Kältemittel ein erstes Expansionsorgan 22, welches bei der dargestellten Ausführungsform als ein thermostatischen Expansionsventil 24 ausgebildet ist. Das thermostatische Expansionsventil 24 ist am kältemittelseitigen Eingang eines Verdampfers 26 angeordnet, auf den weiter unten noch näher einzugehen ist.

Am kältemittelseitigen Ausgang des Verdampfers 26 ist eine Temperatur- und Druckmessstelle 28 für das Kältemittel angeordnet, welche mechanisch und thermisch mit dem thermostatischen Expansionsventil 24 verbunden ist, sodass die Drosselwirkung des thermostatischen Expansionsventils 24 entsprechend einer auslegungsbedingten, mechanisch/thermischen Kennlinie in Abhängigkeit vom Kältemittelzustand an der Messstelle 28 erfolgt. Durch diese Rückkopplung wird die dem Fachmann grundsätzlich bekannte Regelwirkung eines thermostatischen Expansionsventils erzielt.

Der Verdampfer 26 umfasst 2 Verdampferabschnitte, nämlich einen kältemittel- und luftseitig vorgeschalteten ersten Verdampferabschnitt 261 und einen kältemittel- und luftseitig nachgeschalteten zweiten Verdampferabschnitt 262. Beide Verdampferabschnitte 261, 262 sind als Luft/Kältemittel-Wärmeübertrager ausgebildet und kältemittelseitig über ein zweites Expansionsorgan 30, welches erfindungsgemäß als elektronisches Regelventil 32 ausgebildet ist. Luftseitig sind die Verdampferabschnitte 261, 262 derart gekoppelt, dass sie nacheinander von demselben Luftstrom 34 durchströmt werden. Dieser erfährt dabei eine zweistufige Abkühlung, was durch die Schraffur der Luftstrompfeile angedeutet ist. Die Temperatur des Luftstroms 34 am luftseitigen Ausgang des ersten Verdampferabschnitts 261 ist mit einem ersten Temperatursensor 361 erfassbar; die Temperatur des Luftstroms 34 am luftseitigen Ausgang des zweiten Verdampferabschnitts 262 ist mit einem zweiten Temperatursensor 362 erfassbar. Bei der gezeigten Ausführungsform ist zudem die Temperatur des Luftstroms 34 am Eingang des ersten Verdampferabschnitts 261 mittels eines dritten Temperatursensors 363 erfassbar. Druck und Temperatur des Kältemittels am kältemittelseitigen Ausgang des ersten Verdampferabschnitts 261 sind bei der gezeigten Ausführungsform mittels einer weiteren Druck- und Temperaturmessstellte 38 erfassbar.

Bei der gezeigten Ausführungsform ist es möglich, über eine Luftleitklappe 40 den Luftstrom 34 nach Durchströmung des Verdampfers 26 entweder direkt in eine nicht dargestellte Fahrgastzelle des Kraftfahrzeugs zu leiten, oder ihn zumindest teilweise über eine Gegenheiz-Wärmeübertrager 42 zu leiten, der Teil eines Kühlmittelkreislaufs 44 zur Kühlung des Fahrzeugmotors ist.

In Figur 1 nicht dargestellte ist eine Steuereinheit, die eingangsseitig wenigstens mit den Temperatursensoren 361, 362 und ausgangsseitig mit dem Regelventil 32 verbunden ist, um das oben bereits detailliert erläuterte Betriebsverfahren der erfindungsgemäßen Klimatisierungsvorrichtung zu regeln. Die oben erläuterten Abwandlungen der erfindungsgemäßen Klimatisierungsvorrichtung unterscheiden sich von der dargestellten Ausführungsform im Wesentlichen durch die Ausgestaltung des ersten Expansionsorgans 22, nämlich einerseits als zusätzliches Regelventil und andererseits als Fixdrossel anstelle des in Figur 1 gezeigten thermostatischen Expansionsventils. Der Fachmann wird verstehen, dass im Fall des zusätzlichen Regelventils entsprechende eingangs- bzw. ausgangsseitige Verbindungen der Steuereinheit zur Messstelle 28 sowie zu besagtem Regelventil vorhanden sein müssen. Im Fall der Fixdrossel hingegen entfällt die Notwendigkeit der Messstelle 28.

Gleiche Bezugszeichen in den Figuren weisen auf gleiche oder analoge Elemente hin.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere wird der Fachmann die konstruktive Auslegung der einzelnen Elemente, insbesondere des thermostatischen Expansionsventils 24, sowie die Wahl von Solltemperaturen, Grenzwerten und Toleranzbereichen an die Erfordernisse des jeweiligen konkreten Einzelfalls anzupassen wissen. Ebenso wird der Fachmann verstehen, dass die Erfindung sowohl auf Systeme anwendbar ist, die mit einem zwischen den Aggregatzuständen "flüssig" und "gasförmig" wechselnden Kältemittel betrieben werden, als auch auf Systeme, die mit einem stets gasförmigen Kältemittel betrieben werden. In ersterem Fall findet ein dem Kompressor nachgeschalteter Kondensator, in letzterem Fall ein Gaskühler Verwendung.

### Bezugszeichenliste

- 10: Klimatisierungsvorrichtung
- 12: Kältemittelkreis
- 14: Kompressor
- 16: Sammler
- 18: Kondensator oder Gaskühler
- 20: Luftstrom durch 18
- 22: erstes Expansionsorgan
- 24: thermostatisches Expansionsventil
- 26: Verdampfer
- 261: erster Verdampferabschnitt
- 262: zweiter Verdampferabschnitt
- 28: Messstelle
- 30: zweites Expansionsorgan
- 32: Regelventil
- 34: Luftstrom durch 26
- 361: erster Temperatursensor
- 362: zweiter Temperatursensor
- 363: dritter Temperatursensor
- 38: Messstelle
- 40: Luftleitklappe
- 42: Gegenheiz-Wärmeübertrager
- 44: Kühlmittelkreis

## Patentansprüche

1. Klimatisierungsvorrichtung für ein Kraftfahrzeug, umfassend einen Kältemittelkreis (12) mit
- einem Kompressor (14) zur Verdichtung eines Kältemittels,
- einen dem Kompressor (14) kältemittelseitig nachgeschalteten Kondensator oder Gaskühler (18) zur Verflüssigung oder Kühlung des verdichteten Kältemittels und
- einen von einem zu kühlenden Luftstrom (20) durchströmten, dem Kondensator oder Gaskühler (18) kältemittelseitig nachgeschalteten Verdampfer (26), der einen ersten Verdampferabschnitt (261) und einen zweiten Verdampferabschnitt (262) umfasst, wobei der zweite Verdampferabschnitt (262) dem ersten Verdampferabschnitt (261) sowohl luftseitig als auch kältemittelseitig nachgeschaltet ist und wobei kältemittelseitig vor dem ersten Verdampferabschnitt (261) ein erstes Expansionsorgan (22) und hinter dem ersten Verdampferabschnitt (261) und vor dem zweiten Verdampferabschnitt (262) ein zweites Expansionsorgan (30), jeweils zum regulativen Drosseln des Kältemittelstroms, angeordnet ist,
**dadurch gekennzeichnet,**
**dass** das erste Expansionsorgan (22) als thermostatisches Expansionsventil (24) und das zweite Expansionsorgan (30) als Regelventil (32) ausgebildet ist.

2. Klimatisierungsvorrichtung nach Anspruch 1,
**dadurch gekennzeichnet,**
**dass** das thermostatische Expansionsventil (24) sensorisch mit dem kältemittelseitigen Ausgang des zweiten Verdampferabschnitts (262) verbunden ist.

3. Klimatisierungsvorrichtung nach Anspruch 2,
**dadurch gekennzeichnet,**
**dass** das thermostatische Expansionsventil (24) so ausgelegt ist, dass bei geöffnetem Regelventil (32) die Überhitzung des Kältemittels am kältemittelseitigen Ausgang des zweiten Verdampferabschnitts (262) zwischen 1 K und 10 K, bevorzugt zwischen 1,5 K und 5 K, besonders bevorzugt zwischen 1,5 K und 2,5 K, liegt.

4. Verfahren zum Betrieb einer Klimatisierungsvorrichtung nach einem der vorangehenden Ansprüche, umfassend die Schritte:
- bei vollständig geöffnetem Regelventil (32) Durchströmen des Verdampfers (26) mit Kältemittel mit einem Anfangsmassenstrom, wobei die Temperaturen des Luftstroms (34) am luftseitigen Ausgang des ersten Verdampferabschnitts (261) und am luftseitigen Ausgang des zweiten Verdampferabschnitts (262), ausgehend von jeweiligen Anfangstemperaturen, absinken,
- sobald die Temperatur des Luftstroms (34) am luftseitigen Ausgang des ersten Verdampferabschnitts (261) auf eine erste Solltemperatur zwischen 1°C und 3°C abgesunken ist:
regulatives Drosseln des Kältemittelstroms mittels des Regelventils (32), sodass die Temperatur des Luftstroms (34) am luftseitigen Ausgang des ersten Verdampferabschnitts (261) innerhalb eines vorgegebenen ersten Toleranzbereichs um die erste Solltemperatur, jedenfalls jedoch oberhalb 0°C, liegt.

5. Verfahren zum Betrieb einer Klimatisierungsvorrichtung für ein Kraftfahrzeug, umfassend einen Kältemittelkreis mit
- einem Kompressor (14) zur Verdichtung eines Kältemittels,
- einen dem Kompressor kältemittelseitig nachgeschalteten Kondensator oder Gaskühler (18) zur Verflüssigung oder Kühlung des verdichteten Kältemittels und
- einen von einem zu kühlenden Luftstrom durchströmten, dem Kondensator oder Gaskühler kältemittelseitig nachgeschalteten Verdampfer (26) der einen ersten Verdampferabschnitt (261) und einen zweiten Verdampferabschnitt (262) umfasst, wobei der zweite Verdampferabschnitt dem ersten Verdampferabschnitt sowohl luftseitig als auch kältemittelseitig nachgeschaltet ist und wobei kältemittelseitig vor dem ersten Verdampferabschnitt ein erstes Expansionsorgan (22) als Regelventil und hinter dem ersten Verdampferabschnitt und vor dem zweiten Verdampferabschnitt ein zweites Expansionsorgan (30) als Regelventil (32), jeweils zum zum regulativen Drosseln des Kältemittelstroms, angeordnet ist,
umfassend die Schritte:
- bei vollständig geöffnetem zweitem Regelventil Durchströmen des Verdampfers mit Kältemittel mit einem Anfangsmassenstrom, wobei der Kältemittelstrom mittels des ersten Regelventils derart regulativ gedrosselt wird, dass der flüssige Anteil des Kältemittels am kältemittelseitigen Ausgang des zweiten Verdampferabschnitts zwischen 1% und 5%, bevorzugt zwischen 2% und 4%, besonders bevorzugt bei 3%, liegt,
und wobei die Temperaturen des Luftstroms am luftseitigen Ausgang des ersten Verdampferabschnitts und am luftseitigen Ausgang des zweiten Verdampferabschnitts, ausgehend von jeweiligen Anfangstemperaturen, absinken,
- sobald die Temperatur des Luftstroms am luftseitigen Ausgang des ersten Verdampferabschnitts auf eine erste Solltemperatur zwischen 1°C und 3°C abgesunken ist:
regulatives Drosseln des Kältemittelstroms mittels des zweiten Regelventils, sodass die Temperatur des Luftstroms am luftseitigen Ausgang des ersten Verdampferabschnitts innerhalb eines vorgegebenen ersten Toleranzbereichs um die erste Solltemperatur, jedenfalls jedoch oberhalb 0°C, liegt.

6. Verfahren nach Anspruch 5,
**dadurch gekennzeichnet,**
**dass** die Größe des flüssigen Anteils des Kältemittels über eine Messung des Luftmassenstroms und der Luftstromtemperatur abgeschätzt wird.

7. Verfahren nach Anspruch 5,
**dadurch gekennzeichnet,**
**dass** die Größe des flüssigen Anteils des Kältemittels über eine Messung des Drucks und der Temperatur des Kältemittels am kältemittelseitigen Ausgang des zweiten Verdampferabschnitts aus einem hinterlegten Kennfeld ermittelt wird.

8. Verfahren zum Betrieb einer Klimatisierungsvorrichtung für ein Kraftfahrzeug, umfassend einen Kältemittelkreis mit
- einem Kompressor (14) zur Verdichtung eines Kältemittels,
- einen dem Kompressor kältemittelseitig nachgeschalteten Kondensator oder Gaskühler (18) zur Verflüssigung oder Kühlung des verdichteten Kältemittels und
- einen von einem zu kühlenden Luftstrom durchströmten, dem Kondensator oder Gaskühler kältemittelseitig nachgeschalteten Verdampfer, Verdampfer (26), der einen ersten Verdampferabschnitt (261) und einen zweiten Verdampferabschnitt (262) umfasst, wobei der zweite Verdampferabschnitt dem ersten Verdampferabschnitt sowohl luftseitig als auch kältemittelseitig nachgeschaltet ist und wobei kältemittelseitig vor dem ersten Verdampferabschnitt ein erstes Expansionsorgan (22) als Fixdrossel und hinter dem ersten Verdampferabschnitt und vor dem zweiten Verdampferabschnitt ein zweites Expansionsorgan (32) als Regelventil zum regulativen Drosseln des Kältemittelstroms angeordnet ist.
umfassend die Schritte:
- bei vollständig geöffnetem Regelventil Durchströmen des Verdampfers mit Kältemittel mit einem Anfangsmassenstrom, wobei die Temperaturen des Luftstroms am luftseitigen Ausgang des ersten Verdampferabschnitts und am luftseitigen Ausgang des zweiten Verdampferabschnitts, ausgehend von jeweiligen Anfangstemperaturen, absinken,
- sobald die Temperatur des Luftstroms am luftseitigen Ausgang des ersten Verdampferabschnitts auf eine erste Solltemperatur zwischen 1°C und 3°C abgesunken ist:
regulatives Drosseln des Kältemittelstroms mittels des Regelventils, sodass die Temperatur des Luftstroms am luftseitigen Ausgang des ersten Verdampferabschnitts innerhalb eines vorgegebenen ersten Toleranzbereichs um die erste Solltemperatur, jedenfalls jedoch oberhalb 0°C, liegt.

9. Verfahren nach einem der Ansprüche 4 bis 8,
**gekennzeichnet durch** den weiteren Schritt:
sobald die Temperatur des Luftstroms (20) am luftseitigen Ausgang des zweiten Verdampferabschnitts (262) auf eine zweite Solltemperatur, die unter 0°C liegt, abgesunken ist:
regulatives Reduzieren des Kältemittel-Massenstroms durch den Verdampfer (26), sodass die Temperatur des Luftstroms am luftseitigen Ausgang des zweiten Verdampferabschnitts (262) innerhalb eines vorgegebenen zweiten Toleranzbereichs um die zweite Solltemperatur, jedenfalls jedoch unterhalb 0°C, liegt.

10. Verfahren nach Anspruch 9,
**dadurch gekennzeichnet,**
**dass** das Reduzieren des Kältemittel-Massenstroms durch Variieren des Kolbenhubs und/oder der Drehzahl des Kompressors (14) erfolgt.

## Claims

1. An air-conditioning device for a motor vehicle, comprising a refrigerant circuit (12) with
- a compressor (14) for compressing a refrigerant,
- a condenser or gas cooler (18) which is connected downstream of the compressor (14) on the refrigerant side for liquefying or cooling the compressed refrigerant and
- an evaporator (26) which is flowed through by an air flow (20) to be cooled, is connected downstream of the condenser or gas cooler (18) on the refrigerant side and comprises a first evaporator section (261) and a second evaporator section (262), wherein the second evaporator section (262) is connected downstream of the first evaporator section (261) both on the air side and on the refrigerant side, and wherein a first expansion member (22) is arranged upstream of the first evaporator section (261) on the refrigerant side and a second expansion member (30) is arranged downstream of the first evaporator section (261) and upstream of the second evaporator section (262), in each case for throttling the refrigerant flow in a regulatory manner,
**characterized in**
**that** the first expansion member (22) is configured as a thermostatic expansion valve (24) and the second expansion member (30) is configured as a regulating valve (32).

2. The air-conditioning device according to Claim 1,
**characterized in**
**that** the thermostatic expansion valve (24) is connected by sensor means with the refrigerant-side output of the second evaporator section (262).

3. The air-conditioning device according to Claim 2,
**characterized in**
**that** the thermostatic expansion valve (24) is designed so that when the regulating valve (32) is opened the overheating of the refrigerant at the refrigerant-side output of the second evaporator section (262) is between 1 K and 10 K, preferably between 1.5 K and 5 K, particularly preferably between 1.5 K and 2.5 K.

4. A method for operating an air-conditioning device according to any one of the preceding claims, comprising the steps:
- when the regulating valve (32) is completely opened, through-flows of the evaporator (26) with refrigerant with an initial mass flow, wherein the temperatures of the air flow (34) at the air-side output of the first evaporator section (261) and at the air-side output of the second evaporator section (262), based on respective initial temperatures, decrease,
- as soon as the temperature of the air flow (34) at the air-side output of the first evaporator section (261) has decreased to a first target temperature between 1 °C and 3 °C:
Regulative throttling of the refrigerant flow by means of the regulating valve (32), so that the temperature of the air flow (34) at the air-side output of the first evaporator section (261) is within a predetermined first tolerance range around the first target temperature, in any case, however, greater than 0 °C.

5. A method for operating an air-conditioning device for a motor vehicle, comprising a refrigerant circuit with
- a compressor (14) for compressing a refrigerant,
- a condenser or gas cooler (18) which is connected downstream of the compressor (14) on the refrigerant side for liquefying or cooling the compressed refrigerant and
- an evaporator (26) which is flowed through by an air flow to be cooled, is connected downstream of the condenser or gas cooler on the refrigerant side and comprises a first evaporator section (261) and a second evaporator section (262), wherein the second evaporator section is connected downstream of the first evaporator section both on the air side and on the refrigerant side, and wherein a first expansion member (22) is arranged upstream of the first evaporator section on the refrigerant side as a regulating valve and a second expansion member (30) is arranged downstream of the first evaporator section and upstream of the second evaporator section as a regulating valve (32), in each case for throttling the refrigerant flow in a regulatory manner,
comprising the steps:
- when the second regulating valve is completely opened, through-flows of the evaporator with refrigerant with an initial mass flow, wherein the refrigerant flow is throttled in a regulatory manner by means of the first regulating valve in such a manner that the liquid portion of the refrigerant at the refrigerant-side output of the second evaporator section is between 1% and 5%, preferably between 2% and 4%, particularly preferably is 3%, and wherein the temperatures of the air flow at the air-side output of the first evaporator section and at the air-side output of the second evaporate section, based on respective initial temperatures, decrease,
- as soon as the temperature of the air flow at the air-side output of the first evaporator section has decreased to a first target temperature between 1 °C and 3 °C:
Regulative throttling of the refrigerant flow by means of the regulating valve, so that the temperature of the air flow at the air-side output of the first evaporator section is within a predetermined first tolerance range around the first target temperature, in any case, however, greater than 0 °C.

6. The method according to Claim 5,
**characterized in**
**that** the size of the liquid portion of the refrigerant is assessed by means of a measurement of the air mass flow and of the air flow temperature.

7. The method according to Claim 5,
**characterized in**
**that** the size of the liquid portion of the refrigerant is determined by means of a measurement of the pressure and the temperature of the refrigerant at the refrigerant-side output of the second evaporator section from a stored characteristic diagram.

8. A method for operating an air-conditioning device for a motor vehicle, comprising a refrigerant circuit with
- a compressor (14) for compressing a refrigerant,
- a condenser or gas cooler (18) which is connected downstream of the compressor (14) on the refrigerant side for liquefying or cooling the compressed refrigerant and
- an evaporator (26) which is flowed through by an air flow to be cooled, is connected downstream of the condenser or gas cooler on the refrigerant side and comprises a first evaporator section (261) and a second evaporator section (262), wherein the second evaporator section is connected downstream of the first evaporator section both on the air side and on the refrigerant side, and wherein a first expansion member (22) is arranged upstream of the first evaporator section on the refrigerant side as a fixed throttle and a second expansion member (32) is arranged downstream of the first evaporator section and upstream of the second evaporator section as a regulating valve, for throttling the refrigerant flow in a regulatory manner,
comprising the steps:
- when the regulating valve is completely opened, through-flows of the evaporator with refrigerant with an initial mass flow, wherein temperatures of the air flow at the air-side output of the first evaporator section and at the air-side output of the second evaporate section, based on respective initial temperatures, decrease,
- as soon as the temperature of the air flow at the air-side output of the first evaporator section has decreased to a first target temperature between 1 °C and 3 °C:
Regulative throttling of the refrigerant flow by means of the regulating valve, so that the temperature of the air flow at the air-side output of the first evaporator section is within a predetermined first tolerance range around the first target temperature, in any case, however, greater than 0 °C.

9. The method according to any one of Claims 4 to 8,
**characterized by** the further step:
As soon as the temperature of the air flow (20) at the air-side output of the second evaporator section (262) has decreased to a second target temperature, which is less than 0 °C:
Regulative reduction of the refrigerant mass flow through the evaporator (26), so that the temperature of the air flow at the air-side output of the second evaporator section (262) is within a predetermined second tolerance range around the second target temperature, in any case, however, less than 0 °C.

10. The method according to Claim 9,
**characterized in**
**that** the reduction of the refrigerant mass flow takes place by varying the piston stroke and/or the speed of the compressor (14).

## Revendications

1. Dispositif de climatisation pour un véhicule à moteur, comprenant un circuit de réfrigérant (12), avec
- un compresseur (14) pour la compression d'un réfrigérant,
- un condensateur ou un refroidisseur de gaz (18), branché en aval du compresseur (14), côté réfrigérant, pour la liquéfaction ou le refroidissement du réfrigérant compressé et
- un évaporateur (26), branché en aval du condensateur ou du refroidisseur de gaz (18), côté réfrigérant, traversé par un flux d'air (20) à refroidir, qui comprend une première portion d'évaporateur (261) et une deuxième portion d'évaporateur (262), la deuxième portion d'évaporateur (262) étant branchée en aval de la première portion d'évaporateur (261) aussi bien côté air que côté réfrigérant et, côté réfrigérant, avant la première portion d'évaporateur (261), est disposé un premier organe d'expansion (22) et derrière la première portion d'évaporateur (261) et avant la deuxième portion d'évaporateur (262), est disposé un deuxième organe d'expansion (30), pour l'étranglement régulateur du flux de réfrigérant,
**caractérisé en ce que**
le premier organe d'expansion (22) est conçu comme une soupape d'expansion thermostatique (24) et le deuxième organe d'expansion (30) est conçu comme une soupape de régulation (32).

2. Dispositif de climatisation selon la revendication 1,
**caractérisé en ce que**
la soupape d'expansion thermostatique (24) est reliée, par des capteurs, avec la sortie côté réfrigérant de la deuxième portion d'évaporateur (262).

3. Dispositif de climatisation selon la revendication 2,
**caractérisé en ce que**
la soupape d'expansion thermostatique (24) est conçue de façon à ce que, lorsque la soupape de régulation (32) est ouverte, la surchauffe du réfrigérant au niveau de la sortie côté réfrigérant de la deuxième portion d'évaporateur (262) se trouve entre 1 K et 10 K, de préférence entre 1,5 K et 5 K, plus particulièrement de préférence entre 1,5 K et 2,5 K.

4. Procédé de commande d'un dispositif de climatisation selon l'une des revendications précédentes, comprenant les étapes suivantes :
- lorsque la soupape de régulation (32) est complètement ouverte, traversée de l'évaporateur (26) avec le réfrigérant avec un débit massique initial, les températures du flux d'air (34) au niveau de la sortie côté air de la première portion d'évaporateur (261) et au niveau de la sortie côté air de la deuxième portion d'évaporateur (262) diminuant à partir de températures initiales respectives,
- dès que la température du flux d'air (34) au niveau de la sortie côté air de la première portion d'évaporateur (261) a diminué jusqu'à une température de consigne entre 1 °C et 3 °C :
étranglement de régulation du flux de réfrigérant au moyen de la soupape de régulation (32), de façon à ce que la température du flux d'air (34) au niveau de la sortie côté air de la première portion d'évaporateur (261) se trouve à l'intérieur d'une première plage de tolérance prédéterminée autour de la première température de consigne, en tout cas cependant au-dessus de 0 °C.

5. Procédé de commande d'un dispositif de climatisation pour un véhicule à moteur, comprenant un circuit de réfrigérant, avec
- un compresseur (14) pour la compression d'un réfrigérant,
- un condensateur ou un refroidisseur de gaz (18), branché en aval du compresseur (14), côté réfrigérant, pour la liquéfaction ou le refroidissement du réfrigérant compressé et
- un évaporateur (26), branché en aval du condensateur ou du refroidisseur de gaz (18), côté réfrigérant, traversé par un flux d'air (20) à refroidir, qui comprend une première portion d'évaporateur (261) et une deuxième portion d'évaporateur (262), la deuxième portion d'évaporateur (262) étant branchée en aval de la première portion d'évaporateur (261) aussi bien côté air que côté réfrigérant et, côté réfrigérant, avant la première portion d'évaporateur (261), est disposé un premier organe d'expansion (22) en tant que soupape de régulation et derrière la première portion d'évaporateur (261) et avant la deuxième portion d'évaporateur (262), est disposé un deuxième organe d'expansion (30) en tant que soupape de régulation (32), pour l'étranglement régulateur du flux de réfrigérant,
comprenant les étapes suivantes :
- lorsque la deuxième soupape de régulation (32) est complètement ouverte, traversée de l'évaporateur avec le réfrigérant avec un débit massique initial, le flux de réfrigérant étant étranglé de manière régulatrice au moyen de la première soupape de régulation de façon à ce que la partie liquide du réfrigérant au niveau de la sortie côté réfrigérant de la deuxième portion d'évaporateur, soit entre 1 % et 5 %, de préférence entre 2 % et 4 %, plus particulièrement de préférence de 3 %,
et les températures du flux d'air au niveau de la sortie côté air de la première portion d'évaporateur et au niveau de la sortie côté air de la deuxième portion d'évaporateur diminuant à partir de températures initiales respectives,
- dès que la température du flux d'air au niveau de la sortie côté air de la première portion d'évaporateur a diminué jusqu'à une température de consigne entre 1 °C et 3 °C :
étranglement de régulation du flux de réfrigérant au moyen de la deuxième soupape de régulation, de façon à ce que la température du flux d'air au niveau de la sortie côté air de la première portion d'évaporateur se trouve à l'intérieur d'une première plage de tolérance prédéterminée autour de la première température de consigne, en tout cas cependant au-dessus de 0 °C.

6. Procédé selon la revendication 5,
**caractérisé en ce que**
la taille de la part liquide du réfrigérant est évaluée grâce à une mesure du débit massique d'air et de la température du flux d'air.

7. Procédé selon la revendication 5,
**caractérisé en ce que**
la taille de la part liquide du réfrigérant est évaluée grâce à une mesure de la pression et de la température du réfrigérant au niveau de la sortie côté réfrigérant de la deuxième portion d'évaporateur à partir d'un diagramme caractéristique enregistré.

8. Procédé de commande d'un dispositif de climatisation pour un véhicule à moteur, comprenant un circuit de réfrigérant, avec
- un compresseur (14) pour la compression d'un réfrigérant,
- un condensateur ou un refroidisseur de gaz (18), branché en aval du compresseur, côté réfrigérant, pour la liquéfaction ou le refroidissement du réfrigérant compressé et
- un évaporateur (26), branché en aval du condensateur ou du refroidisseur de gaz, côté réfrigérant, traversé par un flux d'air (20) à refroidir, qui comprend une première portion d'évaporateur (261) et une deuxième portion d'évaporateur (262), la deuxième portion d'évaporateur étant branchée en aval de la première portion d'évaporateur aussi bien côté air que côté réfrigérant et, côté réfrigérant, avant la première portion d'évaporateur, est disposé un premier organe d'expansion (22) en tant qu'étranglement fixe et derrière la première portion d'évaporateur et avant la deuxième portion d'évaporateur, est disposé un deuxième organe d'expansion (32) en tant que soupape de régulation, pour l'étranglement régulateur du flux de réfrigérant, comprenant les étapes suivantes :
- lorsque la soupape de régulation est complètement ouverte, traversée de l'évaporateur avec le réfrigérant avec un débit massique initial, les températures du flux d'air au niveau de la sortie côté air de la première portion d'évaporateur et au niveau de la sortie côté air de la deuxième portion d'évaporateur diminuant à partir de températures initiales respectives,
- dès que la température du flux d'air au niveau de la sortie côté air de la première portion d'évaporateur a diminué jusqu'à une température de consigne entre 1 °C et 3 °C :
étranglement de régulation du flux de réfrigérant au moyen de la soupape de régulation, de façon à ce que la température du flux d'air au niveau de la sortie côté air de la première portion d'évaporateur se trouve à l'intérieur d'une première plage de tolérance prédéterminée autour de la première température de consigne, en tout cas cependant au-dessus de 0 °C.

9. Procédé selon l'une des revendications 4 à 8,
**caractérisé par** l'étape supplémentaire suivante :
dès que la température du flux d'air (20) au niveau de la sortie côté air de la deuxième portion d'évaporateur (262) a diminué jusqu'à une deuxième température de consigne, qui se trouve en dessous de 0 °C :
réduction régulatrice du débit massique de réfrigérant à travers l'évaporateur (26), de façon à ce que la température du flux d'air au niveau de la sortie côté air de la deuxième portion d'évaporateur (262) se trouve à l'intérieur d'une deuxième plage de tolérance prédéterminée autour de la deuxième température de consigne, en tout cas cependant au-dessus de 0 °C.

10. Procédé selon la revendication 9,
**caractérisé en ce que**
la réduction du débit massique de réfrigérant est effectuée en faisant varier la course du piston et/ou la vitesse de rotation du compresseur (14).
